# FASCICULE DE BREVET EUROPEEN

(11) **EP 2 748 497 B1**
(45) Date de publication et mention de la délivrance du brevet: **31.10.2018**
(21) Numéro de dépôt: 12761645.6
(22) Date de dépôt: 14.08.2012
(51) Int. Cl.: F02D 9/10, F02M 26/70, F16K 1/22, F16K 1/226

(54) **VANNE DE CIRCULATION DE FLUIDE A VOLET MOBILE**
FLUIDZIRKULATIONSVENTIL MIT EINER BEWEGBAREN KLAPPE
FLUID-CIRCULATION VALVE HAVING A MOBILE FLAP

(30) Priorité: 25.08.2011 FR 1157511
(43) Date de publication de la demande: 02.07.2014
(73) Titulaire: Valeo Systèmes de Contrôle Moteur, 95800 Cergy (FR)
(72) Inventeur: HODEBOURG, Grégory, F-Sartrouville 78500 (FR); ADENOT, Sébastien, F-95300 Pontoise (FR)
(74) Mandataire: Garcia, Christine
(86) Numéro de dépôt international: PCT/FR2012/051902
(87) Numéro de publication internationale: WO 2013/026979

(56) Documents cités:
- DE-A1-102004 032 856
- GB-A- 2 067 719
- GB-A- 2 159 246
- US-A1- 2008 237 521

## Description

La présente invention concerne une vanne de circulation de fluide, du type à volet mobile, destinée à équiper les moteurs à combustion interne, qu'ils soient à essence ou Diesel, de véhicules.

Plus particulièrement, quoique non exclusivement, les vannes objet de l'invention peuvent être prévues sur la ligne d'échappement des moteurs Diesel notamment à des fins de traitement des oxydes d'azote (NOx) en redirigeant une partie des gaz d'échappement dans la ligne d'admission, et sont désignées communément «vanne EGR ». Ou elles peuvent également être prévues en amont sur la ligne d'admission du moteur en dosant alors l'admission d'air dans celui-ci. D'autres applications de la vanne dans des moteurs ou autres installations à circulation de fluide (gazeux ou liquide) pourraient être envisagées sans sortir du cadre de l'invention.

Il est connu des vannes permettant de régler le débit d'un fluide comprenant :
- un corps comportant un conduit traversant pour ledit fluide,
- un volet d'obturation mobile dudit conduit, ayant un guide support,
- un arbre de commande rotatif monté dans le corps, perpendiculairement au conduit, et sur lequel est lié en rotation le guide support du volet,
- des paliers, en matériau à faible coefficient de frottement, disposés entre le corps et l'arbre de commande rotatif, et
- un blocage axial entre l'arbre et le corps.

Ainsi, la commande en rotation de l'arbre permet de régler le débit du fluide circulant dans le conduit de la vanne selon la position angulaire donnée au volet et, dans le cas de la vanne EGR, de prélever une partie des gaz d'échappement pour la rediriger vers la ligne d'admission du moteur selon le régime moteur en présence.

Le blocage axial de l'arbre rotatif de commande est assuré par une rondelle en U introduite, suite à l'agencement d'un palier, dans des gorges ménagées dans le corps et l'arbre, ou encore par emmanchement d'un roulement à billes logé dans un trou de réception du corps et portant l'arbre.

Ces blocages axiaux présentent cependant des défauts, en particulier pour les vannes dont le volet est très fréquemment utilisé comme les vannes EGR. En effet, par suite du fonctionnement répété et soutenu de la vanne aux régimes moteur concernés, il apparaît, à l'usage, une usure entre la rondelle en U et l'arbre au niveau des gorges et, donc, des points durs lors de la rotation de l'arbre sur la rondelle, ainsi qu'un jeu axial provoquant un contact non souhaité entre le volet et le conduit.

Par ailleurs, la solution par roulement à billes nécessite, quant à elle, un outillage de montage complexe et entraîne un coût significatif.

La présente invention a pour but de remédier à ces inconvénients et concerne une vanne de circulation de fluide dont la conception du blocage axial garantit à l'usage une fiabilité de fonctionnement de la vanne, notamment entre le corps, les paliers et l'arbre portant le volet.

A cet effet, la vanne de circulation de fluide telle que définie préalablement est remarquable, selon l'invention, par le fait que le blocage axial de l'arbre est obtenu directement par la coopération entre au moins l'un des paliers et le guide support du volet, le ou lesdits paliers étant amenés en contact axial avec le guide support.

Ainsi, grâce à l'invention, en plus de permettre la rotation de l'arbre de commande (et donc celle du volet d'obturation), le ou les paliers eux-mêmes font office de butée axiale de l'arbre par leur agencement au contact du guide support du volet. Et, comme ces paliers sont réalisés en un matériau à faible frottement, aucune usure ne se produit lors du fonctionnement de la vanne, supprimant l'apparition des points durs et du jeu axial. En conséquence, la réalisation de la vanne s'en trouve simplifiée par la suppression des rondelles et des gorges de réception de celles-ci ou la suppression des roulements à billes et de l'outillage de montage associé, ce qui permet de diminuer les coûts de fabrication tout en fiabilisant la vanne.

Le blocage axial de l'arbre est ainsi obtenu par la coopération entre l'un au moins des paliers et un élément différent de l'arbre et faisant partie du volet, à savoir le guide support, contrairement à ce qui est enseigné dans la demande US2008/237521, dans laquelle le blocage axial de l'arbre s'obtient par la coopération entre l'arbre et les paliers, et contrairement à ce qui est enseigné dans la demande DE 10 2004 032 856, dans laquelle le blocage axial de l'arbre se fait grâce à la coopération entre un téton porté par le volet et la paroi du conduit.

De préférence, le blocage axial de l'arbre est obtenu directement par la coopération entre les paliers et le guide support du volet, lesdits paliers étant amenés respectivement de part et d'autre du guide support lié audit arbre en immobilisant axialement en position ce dernier.

Pour assurer un blocage axial optimal, la distance séparant les deux paliers est sensiblement égale, au jeu fonctionnel près, à la longueur séparant des faces transversales opposées du guide support du volet, dans lequel passe ledit arbre.

Avantageusement, les paliers, logés dans des trous respectifs opposés du corps, notamment diamétralement et perpendiculaires audit conduit, dépassent de la paroi latérale délimitant le conduit du corps pour déboucher à l'intérieur dudit conduit. Ainsi, le guide support reste dans le conduit en étant à distance des trous et de la paroi latérale.

De préférence, les paliers sont montés par ajustement serré dans les trous concernés du corps, ce qui leur garantit une immobilisation totale dans le corps.

Dans une telle vanne, le volet d'obturation est désaxé parallèlement de l'axe de rotation de l'arbre, autour duquel est montée la bague support.

Par exemple, le guide support peut être défini par au moins une chape issue du volet et qui est traversée par l'arbre de commande rotatif.

Toutefois, il peut être également défini par deux chapes espacées l'une de l'autre et traversées par l'arbre de commande rotatif.

Dans un mode particulier de réalisation, le guide support du volet est rapporté sur l'arbre de commande rotatif par soudage, ce qui est notamment recommandé lorsque l'arbre de commande et le volet à guide support sont réalisés dans le même matériau.

Cependant, dans un autre mode de réalisation, lorsque le volet est par exemple en matière plastique et l'arbre en métal, le guide support du volet est monté sur l'arbre par l'intermédiaire d'une pièce formant insert qui est soudée ou fixée par un élément de liaison sur l'arbre, et qui est surmoulée ou emmanchée à l'intérieur du guide support du volet.

Dans une réalisation particulière, ledit arbre peut comprendre deux parties d'arbre distinctes espacées l'une de l'autre, et montées dans les paliers alignés respectifs et dans des chapes respectives du guide support au contact des paliers. Cette réalisation en deux parties de l'arbre permet de dégager la partie centrale du conduit et d'augmenter ainsi la section de passage du fluide.

A titre d'exemples non limitatifs, les paliers sont réalisés en acier inoxydable ou en des alliages de cuivre du type cupro-nickel, bronze.
Les figures annexées feront bien comprendre comment l'invention peut être réalisée. Sur ces figures, des références identiques désignent des éléments semblables.
La figure 1 est une coupe longitudinale d'un exemple de réalisation d'une vanne de circulation de fluide à volet mobile avec, conformément à l'invention, le blocage axial de l'arbre de commande rotatif de la vanne.
La figure 2 montre, en perspective partielle agrandie, le blocage axial de l'arbre de commande rotatif de la vanne et le montage du volet sur l'arbre.
La figure 3 est une vue en coupe transversale de la vanne passant par l'arbre de commande rotatif, selon un autre exemple de réalisation de l'arbre.

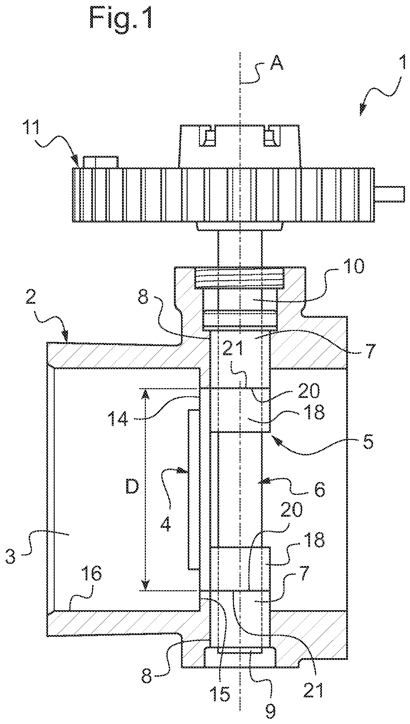

La vanne de circulation fluide 1 représentée sur la figure 1 est, par exemple, la vanne de recirculation des gaz d'échappement d'un moteur, dont le but a été rappelé précédemment.

Structurellement, la vanne 1 comprend, de façon usuelle, un corps 2 à l'intérieur duquel est ménagé un conduit longitudinal 3, et qui est destiné à être monté, par l'intermédiaire de raccords, sur une dérivation de la ligne d'échappement du moteur de manière que la partie des gaz d'échappement circulant dans cette dérivation traverse le conduit et soit déviée vers la ligne d'admission pour être à nouveau brûlée par le moteur. Les raccords, lignes d'échappement et d'admission n'ont pas été représentés, étant bien connus en eux-mêmes et ne faisant pas partie de l'invention.

Dans le corps 2 de la vanne sont reçus principalement un volet d'obturation mobile 4 du conduit 3, avec un guide support 5, un arbre de commande rotatif 6 pour l'actionnement du volet par l'intermédiaire du guide support 5, et des paliers 7 pour le mouvement angulaire de l'arbre par rapport à son axe géométrique A.

Plus particulièrement, deux trous de passage 8 alignés sont ménagés dans le corps 2, de façon perpendiculaire et diamétralement opposée au conduit longitudinal 3 de section circulaire, et reçoivent respectivement les paliers 7 qui sont, dans cet exemple, montés à force dans les trous 8 de façon à être immobilisés en position par rapport au corps 2 de la vanne. Ces paliers fixes 7 sont réalisés en un matériau qui leur assure des propriétés autolubrifiantes et anticorrosives appropriées procurant une longévité renforcée. Pour cela, ils peuvent être en un alliage de cuivre et de nickel ou d'étain, ou en un acier inoxydable.

Dans ces deux paliers 7 par ailleurs identiques, montés dans les trous coaxiaux et circulaires 8 du corps 2, est reçu l'arbre de commande 6 qui peut ainsi pivoté dans les paliers fixes autour de l'axe A. L'une, 9, des extrémités de l'arbre 6, qualifiée d'inférieure par rapport à la figure 1, s'engage dans le palier correspondant, tandis que l'autre extrémité supérieure 10 traverse le palier correspondant et débouche vers l'extérieur du corps 2 de la vanne 1 pour être reliée à la commande proprement dite 11 de l'arbre 6, qui peut être un mécanisme à engrenages avec moteur comme sur la figure 1, ou un moteur rapporté directement en bout de l'arbre.

L'arbre de commande 6 est lié en rotation avec le guide support 5 du volet d'obturation 4, ce qui permet à ce dernier de pouvoir tourner entre deux positions extrêmes dont l'une, ouverte totalement (le plan du volet étant dans le sens de circulation des gaz), laisse passer le fluide, et dont l'autre, fermée contre un joint d'étanchéité 14 appliqué sur une portée (ou épaulement) 15 ménagée sur la paroi latérale 16 du conduit (le plan du volet étant perpendiculaire au sens de circulation des gaz, figure 1), bloque la circulation du fluide.

Le guide support 5 de liaison avec l'arbre se présente sous forme d'une ou de chapes 18 annulaires ou analogues, dans la ou lesquelles est reçu l'arbre 6 et qui sont intégrées au volet lui-même par une fabrication par moulage notamment. Le volet 4 à guide 5 est par exemple réalisé en métal ou en une matière plastique appropriée.

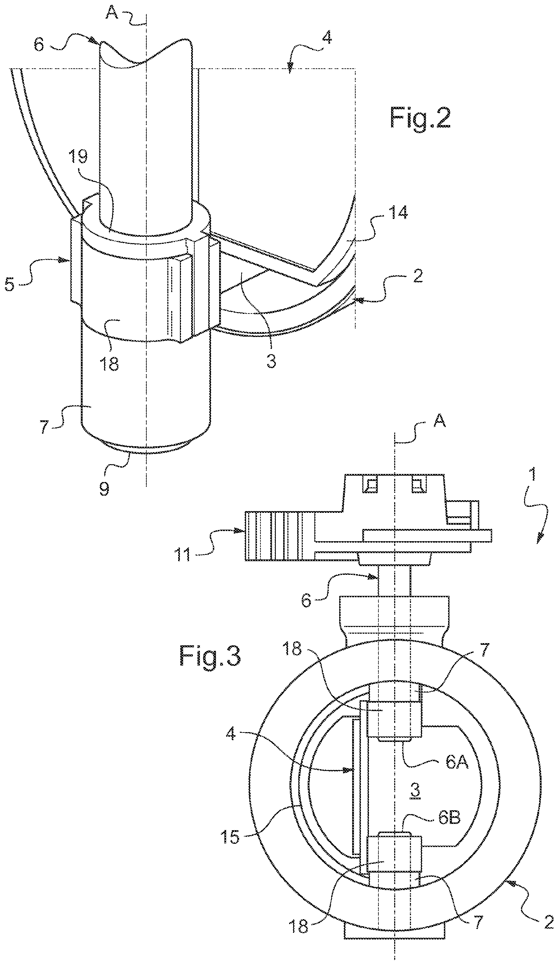

Comme on le voit sur les figures 1 et 2, le guide support 5 se compose ici de deux chapes coaxiales 18, distantes l'une de l'autre et issues du volet, de sorte que l'arbre 6 traverse, dans cet exemple, successivement les deux chapes.

La liaison en rotation des chapes 18 du volet 4 avec l'arbre de commande 6 peut s'effectuer de différentes façons.

Si les matériaux du volet et de l'arbre sont identiques, par exemple en métal, une opération de soudage peut être réalisée. S'ils sont de nature différente, par exemple le volet en matière plastique et l'arbre métallique, une pièce intermédiaire annulaire 19 formant insert peut être montée à l'intérieur des chapes 18 par surmoulage ou par emmanchement, l'arbre 6 étant introduit dans les pièces annulaires 19 puis soudé avec celles-ci, comme le montre la figure 2. On peut aussi envisager de fixer les chapes ou les pièces d'insertion sur l'arbre par des éléments de fixation usuels (vis, goupilles, ...).

Quant à l'arrêt axial de l'arbre de commande 5, conformément à l'invention, il consiste à mettre axialement en contact, au jeu fonctionnel près, les paliers 7 avec les chapes 18 du guide support 5 du volet 4, pour éviter les problèmes d'usure préalablement évoqués.

Pour cela, comme le montrent les figures 1 et 2, les paliers 7 sont logés dans les trous de réception 8 de façon qu'ils fassent quelque peu saillie de la paroi latérale 16 qui délimite le conduit longitudinal 3 de la vanne. Et, à partir de la distance axiale D séparant alors les faces transversales en regard 20 des deux paliers 7, on détermine une longueur entre les faces transversales extérieures 21 des chapes 18, qui permet à celles-ci de s'engager entre les paliers 7. Pour tenir compte de la dilatation thermique de la vanne au contact des gaz d'échappement chauds, un jeu fonctionnel de quelques centièmes voire de quelques dixièmes de millimètre peut être nécessaire entre les paliers 7 et le guide support 5 du volet.

Ainsi, le blocage axial de l'arbre 6 avec le volet d'obturation 4 est obtenu directement par les paliers fixes 7 qui, avantageusement, par leur propriété autolubrifiante intrinsèque, évite toute usure des chapes formant le guide support 5 du volet lorsque celui-ci tourne par suite de la commande répétée de l'arbre. Un tel blocage axial de l'arbre de commande 6 de la vanne 1 limite considérablement les problèmes de frottement et d'usure apparaissant avec les réalisations antérieures.

On remarque, par ailleurs, que le volet d'obturation 4 de la vanne 1 est désaxé par rapport à l'axe de rotation A de l'arbre. Le volet lui-même qui assure l'étanchéité avec le joint du conduit en position fermée de la vanne, et les chapes de guidage qui font l'arrêt en translation, ne sont donc pas dans même plan.

Une autre réalisation de l'arbre de commande 6 est représentée en regard de la figure 3. Sur celle-ci, l'arbre 6 est en deux parties et se compose de deux demi-arbres coaxiaux 6A, 6B s'engageant respectivement dans les deux paliers 7 logés dans le corps 2 de la vanne, et dans les chapes correspondantes 18 du guide support 5 du volet 4. Celui-ci assure la liaison entre les deux demi-arbres et le maintien axial en position de ceux-ci par les paliers. Comme on peut le voir sur la figure, une telle réalisation permet d'augmenter la section de passage des gaz à travers le conduit 3 par la suppression de la partie centrale de l'arbre 6 (figure 1).

L'invention n'est pas limitée aux exemples qui viennent d'être décrits.

## Revendications

1. Vanne de circulation de fluide du type comportant :
- un corps (2) comportant un conduit traversant (3) pour ledit fluide,
- un volet d'obturation mobile (4) dudit conduit, ayant un guide support (5),
- un arbre de commande rotatif (6) monté dans le corps et sur lequel est lié en rotation le guide support du volet,
- des paliers (7) disposés entre le corps et l'arbre de commande rotatif, et
- un blocage axial entre l'arbre et le corps, le blocage axial de l'arbre étant obtenu directement par la coopération entre au moins l'un des paliers (7) et le guide support (5) du volet (4), le ou lesdits paliers (7) étant amenés en contact axial avec le guide support (5),
**caractérisée en ce que** ledit guide support (5) fait partie du volet (4).

2. Vanne selon la revendication 1, dans laquelle le blocage axial de l'arbre est obtenu directement par la coopération entre les paliers (7) et le guide support (5) du volet (4), lesdits paliers (7) étant amenés respectivement de part et d'autre du guide support (5) lié audit arbre (6) en immobilisant axialement en position ce dernier.

3. Vanne selon l'une des revendications 1 et 2, dans laquelle la distance D séparant les deux paliers (7) est sensiblement égale, au jeu fonctionnel près, à la longueur séparant des faces transversales opposées du guide support du volet, dans lequel passe ledit arbre.

4. Vanne selon l'une des revendications 1 à 3, dans laquelle les paliers (7), logés dans des trous respectifs (8) opposés du corps, et perpendiculaires audit passage, dépassent de la paroi latérale (16) délimitant le conduit (3) du corps (2) pour déboucher à l'intérieur dudit conduit.

5. Vanne selon la revendication 4, dans laquelle les paliers (7) sont montés par ajustement serré dans les trous concernés (8) du corps.

6. Vanne selon l'une des revendications 1 à 5, dans laquelle le guide support (5) est défini par au moins une chape (18) issue du volet (4) et qui est traversée par l'arbre de commande rotatif (6).

7. Vanne selon l'une des revendications 1 à 5, dans laquelle le guide support (5) est défini par deux chapes (18) espacées l'une de l'autre et traversées par l'arbre de commande rotatif (6).

8. Vanne selon l'une des revendications 1 à 7, dans laquelle le guide support (5) du volet est rapporté sur l'arbre de commande rotatif (6) par soudage.

9. Vanne selon l'une des revendications 1 à 7, dans laquelle le guide support (5) du volet (4) est monté sur l'arbre (6) par l'intermédiaire d'une pièce formant insert (19) qui est soudée ou fixée par un élément de liaison sur l'arbre et qui est surmoulée ou emmanchée à l'intérieur du guide support (5) du volet.

10. Vanne selon l'une des revendications 7 à 9, dans laquelle ledit arbre (6) comprend deux parties d'arbre distinctes (6A, 6B) espacées l'une de l'autre et montées dans les paliers alignés respectifs (7) et dans des chapes respectives (18) du guide support au contact des paliers.

## Patentansprüche

1. Fluidzirkulationsventil des Typs, umfassend:
- einen Körper (2), der eine Durchgangsleitung (3) für das Fluid aufweist,
- eine bewegbare Verschlussklappe (4) der Leitung, die eine Stützführung (5) aufweist,
- eine drehbare Steuerwelle (6), die in dem Körper angebracht ist und auf der die Stützführung der Klappe in Drehung verbunden ist,
- Lager (7), die zwischen dem Körper und der drehbaren Steuerwelle angeordnet sind, und
- eine axiale Blockierung zwischen der Welle und dem Körper, wobei die axiale Blockierung der Welle direkt durch das Zusammenwirken zwischen mindestens einem der Lager (7) und der Stützführung (5) der Klappe (4) erhalten wird, wobei das oder die Lager (7) in axialen Kontakt mit der Stützführung (5) gebracht werden, **dadurch gekennzeichnet, dass** die Stützführung (5) Teil der Klappe (4) ist.

2. Ventil nach Anspruch 1, wobei die axiale Blockierung der Welle direkt durch das Zusammenwirken zwischen mindestens den Lagern (7) und der Stützführung (5) der Klappe (4) erhalten wird, wobei die Lager (7) jeweils beiderseits der Stützführung (5), die mit der Welle (6) verbunden ist, gebracht werden, indem diese Letztere axial in Position immobilisiert wird.

3. Ventil nach einem der Ansprüche 1 und 2, wobei der Abstand D, der die zwei Lager (7) trennt, im Wesentlichen nahe dem funktionellen Spiel gleich der Länge ist, die die gegenüberliegenden Querflächen der Stützführung der Klappe trennt, in der die Welle durchgeht.

4. Ventil nach einem der Ansprüche 1 bis 3, wobei die Lager (7), die in jeweiligen gegenüberliegenden Löchern (8) des Körpers untergebracht sind und die senkrecht zu dem Durchgang sind, über die Seitenwand (16) hinausgehen, die die Leitung (3) des Körpers (2) begrenzt, um im Inneren der Leitung zu münden.

5. Ventil nach Anspruch 4, wobei die Lager (7) durch Presssitz in den betreffenden Löchern (8) des Körpers befestigt sind.

6. Ventil nach einem der Ansprüche 1 bis 5, wobei die Stützführung (5) durch mindestens ein Gabelstück (18) definiert ist, das aus der Klappe (4) hervorgegangen ist und das von der drehbare Steuerwelle (6) durchquert ist.

7. Ventil nach einem der Ansprüche 1 bis 5, wobei die Stützführung (5) durch zwei Gabelstücke (18) definiert ist, die voneinander beabstandet sind und von der drehbare Steuerwelle (6) durchquert sind.

8. Ventil nach einem der Ansprüche 1 bis 7, wobei die Stützführung (5) der Klappe durch Schweißen auf der drehbaren Steuerwelle (6) aufgebracht ist.

9. Ventil nach einem der Ansprüche 1 bis 7, wobei die Stützführung (5) der Klappe (4) über ein einen Einsatz bildendes Teil (19) auf der Welle (6) angebracht ist, das durch ein Verbindungselement auf die Welle geschweißt oder daran befestigt ist und das im Inneren der Stützführung (5) der Klappe aufgeformt oder aufgeschrumpft ist.

10. Ventil nach einem der Ansprüche 7 bis 9, wobei die Welle (6) zwei verschiedene Wellenteile (6A, 6B) aufweist, die voneinander beabstandet sind und in den jeweiligen ausgerichteten Lagern (7) und in den jeweiligen Gabelstücken (18) der Stützführung in Kontakt mit den Lagern befestigt sind.

## Claims

1. Fluid circulation valve of the type comprising:
- a body (2) comprising a through channel (3) for said fluid,
- a mobile flap (4) for sealing said channel, having a support guide (5),
- a rotary drive shaft (6) mounted in the body to which the support guide of the flap is linked in rotation,
- bearings (7) arranged between the body and the rotary drive shaft, and
- an axial locking between the shaft and the body, the axial locking of the shaft being obtained directly by the cooperation between at least one of the bearings (7) and the support guide (5) of the flap (4), said bearing or bearings (7) being brought into axial contact with the support guide (5)
**characterized in that** said support guide (5) forms part of the flap.

2. Valve according to Claim 1, in which the axial locking of the shaft is obtained directly by the cooperation between the bearings (7) and the support guide (5) of the flap (4), said bearings (7) being brought respectively on either side of the support guide (5) linked to said shaft (6) by axially immobilizing the latter in position.

3. Valve according to either of Claims 1 and 2, in which the distance D separating the two bearings (7) is substantially equal, to within the tolerance of a functional play, to the length separating opposite transversal faces of the support guide of the flap, in which said shaft passes.

4. Valve according to one of Claims 1 to 3, in which the bearings (7), housed in respective opposite holes (8) of the body, and at right angles to said passage, extend beyond the lateral wall (16) delimiting the channel (3) of the body (2) to emerge inside said channel.

5. Valve according to Claim 4, in which the bearings (7) are mounted by tight fit in the relevant holes (8) of the body.

6. Valve according to one of Claims 1 to 5, in which the support guide (5) is defined by at least one cap (18) stemming from the flap (4) and which is passed through by the rotary drive shaft (6).

7. Valve according to one of Claims 1 to 6, in which the support guide (5) is defined by two caps (18) spaced apart from one another and passed through by the rotary drive shaft (6).

8. Valve according to one of Claims 1 to 7, in which the support guide (5) of the flap is attached to the rotary drive shaft (6) by welding.

9. Valve according to one of Claims 1 to 7, in which the support guide (5) of the flap (4) is mounted on the shaft (6) via an insert-forming part (19) which is welded or fastened by a link element to the shaft and which is overmolded or fitted inside the support guide (5) of the flap.

10. Valve according to one of Claims 7 to 9, in which said shaft (6) comprises two distinct shaft parts (6A, 6B) spaced apart from one another and mounted in the respective aligned bearings (7) and in respective caps (18) of the support guide in contact with the bearings.
